Europäisches Patentamt

European Patent Office

Office européen des brevets

(11) Veröffentlichungsnummer: **0 078 934**
**B1**

## (12) EUROPÄISCHE PATENTSCHRIFT

(45) Veröffentlichungstag der Patentschrift:
14.05.86

(51) Int. Cl.⁴: **B 29 C 45/14**

(21) Anmeldenummer: 82109532.0

(22) Anmeldetag: 15.10.82

(54) **Verfahren zur Herstellung einer Kontaktmatte.**

(30) Priorität: 06.11.81 DE 3144084

(43) Veröffentlichungstag der Anmeldung:
18.05.83 Patentblatt 83/20

(45) Bekanntmachung des Hinweises auf die Patenterteilung:
14.05.86 Patentblatt 86/20

(84) Benannte Vertragsstaaten:
AT FR GB IT

(56) Entgegenhaltungen:
DE - A - 2 822 033
DE - A - 3 102 219
FR - A - 2 306 071
US - A - 4 067 102

(73) Patentinhaber: **PREH, Elektrofeinmechanische Werke Jakob Preh Nachf. GmbH & Co.,**
**Postfach 1740 Schweinfurter Strasse 5, D-8740 Bad Neustadt/Saale (DE)**

(72) Erfinder: **Oelsch, Jürgen, Dipl.-Ing., Sudetenstrasse 11, D-8740 Salz (DE)**
Erfinder: **Volk, Richard, Alter Bahnweg 10, D-8740 Brendlorenzen (DE)**
Erfinder: **Claassen, Karl-Heinz, Birkenring 3, D-8741 Wülfershausen (DE)**

## Beschreibung

Die Erfindung geht von einem Verfahren zur Herstellung einer Kontaktmatte nach dem Oberbegriff des Anspruches 1 aus.

Bedingt durch den allgemeinen Trend von der Analog- zur Digitaltechnik und von der Hard- zur Software werden in zunehmenden Masse Drucktastenschalter, einzeln oder in Tastaturen zusammengefasst, in Geräten der Elektrotechnik, der Nachrichtentechnik und nicht zuletzt in sogenannten Terminals oder Dateneingabevorrichtungen eingesetzt. Es gibt eine ganze Reihe von verschiedenen Bauarten und Funktionsprinzipien für derartige Tastaturen, die die Schnittstelle zwischen Mensch und Maschine darstellen. Von grosser Bedeutung für die Zuverlässigkeit, aber auch für den Kontakt Mensch – Tastatur, ist die Art des Hubes. Neben den sogenannten Flachtastaturen mit einem Hub bis ca. 1,5 mm gibt es auch je nach Anwendungsbereich Tastaturen mit einem Hub zwischen 1,5 und 6,35 mm. Daneben werden natürlich auch Tastaturen mit Berührungsschaltern verwendet. Allen Tastaturen mit Hub ist jedoch gemeinsam, dass die Bedienperson über das Gefühl eine Art Rückkopplung erhalten sollte, dass die jeweilige Drucktaste betätigt worden ist.

Es ist aus der DE-A-24 18 583 bereits eine Tastatur bekannt, bei der über einer mit Leiterbahnen versehenen gedruckten Schaltungsplatte Schnappelemente angeordnet sind, die aus einem gummielastischen Werkstoff bestehen und die Tafelbergform aufweisen. Der über den Kontaktstellen der gedruckten Schaltungsplatte liegende Abschnitt ist durch eine falt- oder klappbare Wand mit dem übrigen Teil verbunden. Die Wand ist hierbei so ausgebildet, dass ihre Dicke allmählich abnimmt von einem oberen Abschnitt gegen einen mittleren Abschnitt und allmählich zunimmt von dem mittleren Abschnitt zu einem unteren Abschnitt mit einer gebogenen Fläche, die nach innen in das Innere des Schnappelementes geneigt ist und sich von dem mittleren Abschnitt zum oberen Abschnitt erstreckt. Durch Deformierung der Wand wird so eine Rückstellkraft gewonnen, wobei die Bedienperson eine Art Schnappeffekt fühlt.

Es sind ferner sogenannte Schaltmatten aus nichtleitendem Silicongummi für Tastaturen bekannt, die eine Anzahl von kuppelförmigen Erhebungen aufweisen. Im hohlen Innenraum einer solchen Erhebung ist jeweils ein Kontaktelement aus leitendem Silicongummi angeordnet, das mit Kontaktflächen einer gedruckten Schaltungsplatte zusammenwirkt. Eine derartige Schaltmatte ist z.B. aus der DE-A-30 29 515 bekannt. Auf einer formstabilen, elektrisch isolierenden Bodenplatte sind ortsfeste Kontakte angeordnet. Über dieser Bodenplatte befindet sich die eigentliche Schaltmatte mit einem flächenartigen Verbundkörper und den kuppelförmigen Erhebungen. Die Schaltmatte selbst wird durch Formpressen, Vakuumformen oder Spritzgiessen aus einer Silicongummimischung hergestellt, die aus einem Siliconkautschuk und einem Vernetzungsmittel besteht. Das Kontaktelement ist aus einer im Handel erhältlichen, elektrisch leitfähigen Siliconkautschukmasse hergestellt und es wird an der Innenwand einer Erhebung anvulkanisiert. Daneben kann das Kontaktelement auch aus einem elektrisch leitfähigen Kunststoff ausgeformt sein oder es kann auf den Trägerkörper durch Aufdrucken, Übertragen oder Beschichten mit einer elektrisch leitfähigen Masse hergestellt sein.

Eine weitere Schaltmatte und ein Verfahren zu deren Herstellung ist in der DE-A-29 02 892 beschrieben. Zunächst werden auf einen Träger die Kontaktelemente aufgebracht. Hierbei wird auf den Träger eine gleichmässige Schicht einer unvernetzten, elektrisch leitfähigen Elastomermischung aufgetragen. Diese Schicht wird unter Druck- und Wärmeeinwirkung in einem Formwerkzeug zu der gewünschten Struktur der Kontaktelemente verformt, wobei eine vollständige oder teilweise Vernetzung stattfindet. Das Formwerkzeug weist schmale Hochkanten auf, die dem Kontaktelement entsprechen. Die Konturränder am Formwerkzeug und die Schliesskraft sind so aufeinander abgestimmt, dass beim Schliessen der Form das Elastomermaterial zwischen der Oberfläche des Trägers und den Stirnseiten der Konturstege oder Hochkanten des Formwerkzeuges herausgepresst wird. Nach dem Öffnen der Form bleiben auf dem Träger nur die Kontaktelemente übrig. Jetzt wird darüber eine elektrisch isolierende unvernetzte Elastomermischung aufgetragen, die den Verbundkörper bilden soll. Daraufhin erfolgt unter Druck und Wärmeeinwirkung eine Vernetzung. Wenn als Grundwerkstoff für die Kontaktelemente und für den Verbundkörper das gleiche Elastomer verwendet wird, so können beide ohne Haftvermittler zu einem einheitlichen Körper miteinander verbunden werden. Nimmt man unterschiedliche Grundwerkstoffe, so ist die Verwendung eines Haftvermittlers oder eines Klebstoffes erforderlich. In einem abschliessenden Schritt wird der Träger von der Schaltmatte abgezogen.

Ein anderes Verfahren zur Herstellung einer Schaltmatte ist aus der DE-A-28 22 033 bekannt. Durch einen geeigneten Spalt in einem Spritzgusswerkzeug wird ein Band aus einem elektrisch leitfähigen Silicongummi gezogen, aus dem mittels Stempel die Kontaktelemente ausgestanzt und zu jeweils einem Formnest verschoben werden. Anschliessend wird über einen Einspritzkanal nichtleitender Silicongummi in die erhitzte Form eingespritzt. Nach der Ausvulkanisierung entsteht eine feste Verbindung zwischen Kontaktelement und Verbundkörper. Nach dem Öffnen der Formhälften wird die fertige Schaltmatte mittels Druckluft ausgeworfen.

Aufgabe der vorliegenden Erfindung ist es, ein Verfahren zur Herstellung einer Kontaktmatte für ein Drucktastenfeld nach der eingangs genannten Art zu finden, bei dem die Kontaktelemente auf einfache Weise, abfallos hergestellt werden können.

Diese Aufgabe wird erfindungsgemäss durch die im kennzeichnenden Teil des Patentanspruches 1 angegebenen Verfahrensmerkmale gelöst.

Weitere vorteilhafte Ausgestaltungen der Erfindung sind den Unteransprüchen zu entnehmen.

Die Erfindung wird nachfolgend für ein Ausführungsbeispiel anhand der Zeichnungen näher beschrieben. Von den Figuren zeigt:

Figur 1 eine perspektivische Ansicht einer Kontaktmatte, teilweise im Schnitt,

Figur 2 eine Teilansicht des Spritzgusswerkzeuges im Schnitt im Augenblick des Anspritzens des Kontaktelementes,

Figur 3 die gleiche Teilansicht des Spritzgusswerkzeuges im Schnitt vor dem Spritzen des Trägerteils und des Verbundkörpers,

Figur 4 die gleiche Teilansicht des Spritzgusswerkzeuges im Schnitt nach dem Spritzen des Trägerteils und des Verbundkörpers,

Figur 5 eine Draufsicht auf das Werkzeugunterteil,

Figur 6 eine Seitenansicht des Gesamtwerkzeuges,

Figur 7 eine perspektivische Ansicht des Gesamtwerkzeuges im Schnitt.

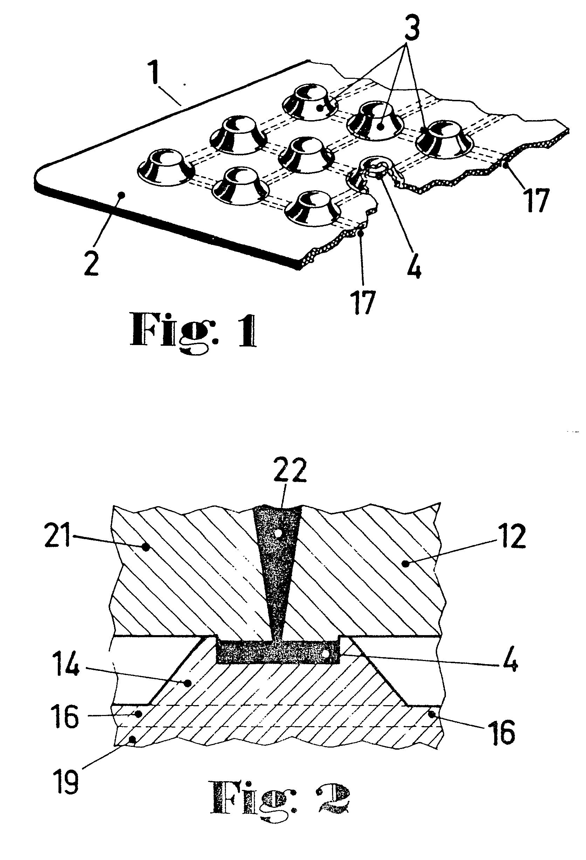

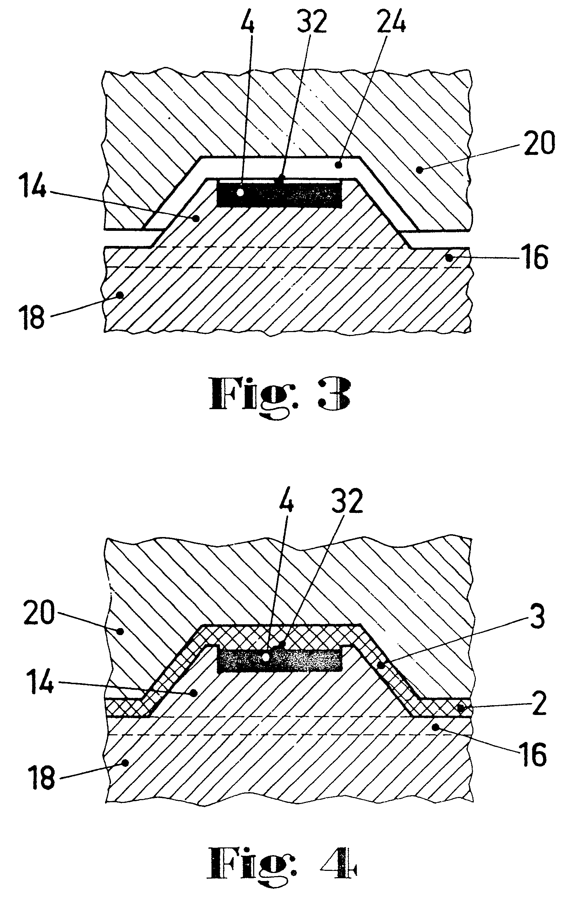

Die in Figur 1 mit 1 bezeichnete Kontaktmatte ist Teil eines nicht weiter dargestellten Drucktastenfeldes mti einer gedruckten Schaltung und mit Betätigungsknöpfen. Die Kontaktmatte 1 selbst besteht aus einem flächenartigen, verhältnismässig dünnen Verbundkörper 2, der aus einem elektrisch nicht leitenden Siliconkautschuk hergestellt ist. Überall da wo Betätigungsknöpfe vorgesehen sind, sind im Verbundkörper 2 nach einer Seite aus der Ebene des Verbundkörpers herausragende Trägerteile 3 vorhanden. Diese Trägerteile 3 sind kalottenförmig ausgebildet und lassen sich elastisch verformen. Auf der Innenseite des Trägerteils befindet sich im Polbereich ein Kontaktteil 4, das aus einem elektrisch gut leitenden Material hergestellt ist. Wird nun das Trägerteil z.B. durch den Betätigungsknopf oder einen Finger niedergedrückt, so entsteht über das Kontaktteil eine elektrische Verbindung zwischen den Kontaktflächen einer gedruckten Schaltung. Wird der Druck aufgehoben, so schnappt das Trägerteil selbständig in seine ursprüngliche Lage zurück. Da die Kontaktmatte auf der gedruckten Schaltung flach aufliegt, müsste beim Niederdrücken ein Grossteil der vorhandenen Luft irgendwie entweichen. Ein selbständiges Zurückschnappen wäre dann allerdings nicht mehr gegeben, da im Hohlraum ein Unterdruck entstehen würde. Um die ausweichende Luft beim Niederdrücken ausgleichen zu können, sind zwischen den einzelnen Trägerteilen Druckausgleichkanäle 17 vorgesehen, die sich netzartig auf der Unterseite des Verbundkörpers 2 erstrecken.

Wie zuvor erwähnt, ist die Kontaktmatte aus einem Siliconkautschuk hergestellt, und zwar verwendet man vorzugsweise sogenannten HTV-Siliconkautschuk (HTV=hochtemperaturvernetzend) in einer plastischen Konsistenz. Durch Vernetzung (Vulkanisation) wird der plastische Siliconkautschuk in elastischen Silicongummi übergeführt und somit die Formgebung fixiert. Die Vernetzung erfolgt im Unterschied zu RTV-Siliconkautschuken (RTV=raumtemperaturvernetzend) in der Hitze und wird entweder mittels organischer Peroxide oder spezieller Vulkanisationskatalysatoren bewirkt. Es gibt somit zwei technisch bedeutsame Möglichkeiten zur Vulkanisation, die sich vor allem hinsichtlich des Vulkanisationsablaufes prinzipiell voneinander unterscheiden. Die konventionelle Vulkanisation erfolgt durch die bereits erwähnten organischen Peroxide, die bei Wärmeeinwirkung unter Bildung von Radikalen gespalten werden. Erst die Radikale setzen die Vulkanisationsreaktion in Gang, im Zuge derer sie in andere organische Verbindungen übergeführt werden, die aus den Vulkanisaten durch die sich an die Vulkanisation normalerweise anschliessende Temperung entfernt werden können. Neben den peroxidischvernetzenden Siliconkautschuken gibt es die additions-vernetzenden Typen. Das äusserliche Charakteristikum dieser Typen besteht darin, dass sie in zwei getrennten Komponenten geliefert werden, die reaktionsfähige (Alkenyl- bzw. SiH-) Gruppen besitzen. In einer Komponente ist zudem ein spezifischer Katalysator enthalten, der u.a. durch Schwefel-, Phosphor- und Stickstoffverbindungen leicht vergiftet werden kann und der dadurch seine Funktionsfähigkeit verliert. Der Vollständigkeit halber soll noch erwähnt werden, dass es neben den peroxidisch und additionsvernetzenden Systemen noch kondensationsvernetzende Systeme gibt. Alle HTV-Siliconkautschuke sind prinzipiell in jedem Verhältnis miteinander mischbar, jedoch sollten naheliegenderweise peroxidisch-vernetzende nicht mit additionsvernetzenden Typen verschnitten werden. Dies ist wichtig insbesondere dann, wenn – wie es üblich ist – das Kontaktteil ebenso wie der Verbundkörper und das Trägerteil auch aus einem Siliconkautschuk hergestellt ist, dem lediglich zusätzlich elektrisch leitende Teilchen, z.B. in Form von Teilchen aus Kohlenstoff oder Metall, beigemengt sind.

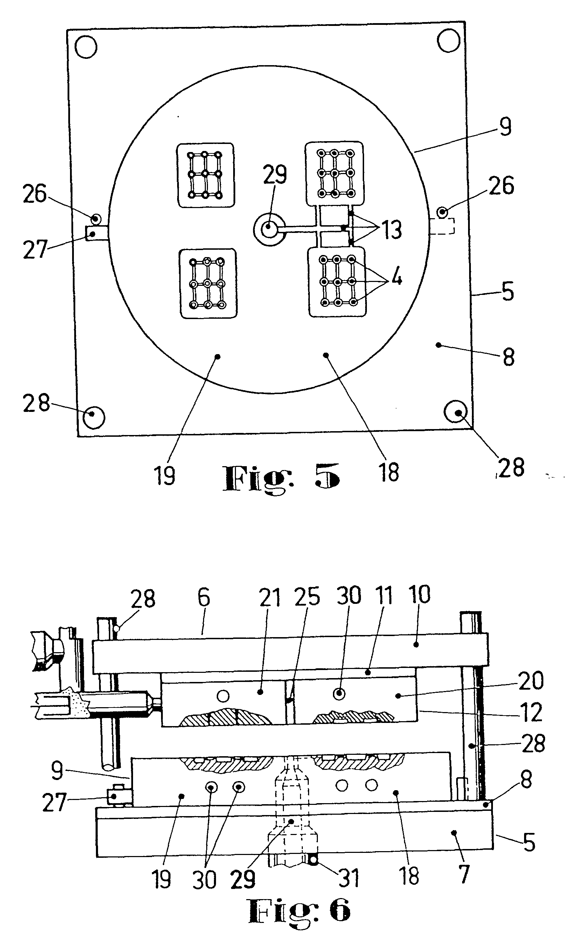

Während in den Figuren 2 bis 4 die einzelnen Herstellungsschritte prinzipiell dargestellt sind, sind Einzelheiten des Spritzgusswerkzeuges aus den Figuren 5 bis 7 zu entnehmen. Das Spritzgusswerkzeug besteht aus einem Werkzeugunterteil 5 und einem Werkzeugoberteil 6. Beide sind über Führungssäulen 28, die in den Ecken des rechteckigen Werkzeuges angeordnet sind, miteinander verbunden. Auf diesen Führungssäulen entlanggleitend können die beiden Werkzeughälften relativ zueinander verschoben werden, um nach dem Spritzvorgang, wenn die beiden Werkzeughälften beabstandet sind, die fertigen Kontaktmatten aus dem Werkzeug durch Auswerferstifte oder durch Druckluft herauswerfen zu können. Zweckmässigerweise wird man eine Werkzeughälfte fest mit den Führungssäulen verbinden, während die andere Werkzeughälfte, wie aus dem in Figur 6 dargestellten Ausführungsbeispiel hervorgeht, das Werkzeugoberteil 6, verschiebbar angeordnet ist.

Ebenfalls in Figur 6 auf der linken Seite oben dargestellt ist, allerdings nur schematisch angedeutet, ein Teil der Spritzgussmaschine mit dem Druckzylinder, dem Pressstempel, dem Fülltrichter und der Dosiereinrichtung. Das Werkzeugunterteil 5 setzt sich zusammen aus der Grundplatte 7, einer Wärmeisolierschicht 8 oder Wärme-Isolierplatte und der Untergesenkplatte 9. Ganz analog hierzu ist auch das Werkzeugoberteil 6 aufgebaut. An eine Grundplatte 10 schliesst sich die Wärmeisolierschicht 11 bzw. -platte an. Darauf folgt die Obergesenkplatte 12. Diese Obergesenkplatte 12 ist hinsichtlich ihrer Temperatur durch eine Isolierwand 25 in eine rechte Hälfte 20 und in eine linke Hälfte 21 unterteilt. Sowohl in der Unter- als auch in der Obergesenkplatte sind zahlreiche Öffnungen 30 vorhanden, die Heizpatronen zur Aufheizung aufnehmen sollen.

Wie nachfolgend noch näher ausgeführt wird, kann die Untergesenkplatte 9 durch eine in den Figuren nicht näher dargestellte Einrichtung um 180 Grad gegenüber ihrer Grundplatte 7 und gegenüber dem Werkzeugoberteil gedreht werden. Ein Teil dieser Einrichtung wird von einer Hohlwelle 31 gebildet, die durch die Grundplatte 7 hindurchragt und in ihr drehbar gelagert ist. Im Inneren der Hohlwelle befindet sich der zentrale Angusskanal 29 für die davon ausgehenden Angusskanäle 13 in der Untergesenkplatte. Der Verlauf dieser Angusskanäle 13 kann aus Figur 7 entnommen werden. Es ist vorteilhaft, gerade für das sich drehende Teil einen zentralen Anguss zu wählen, um mit Sicherheit zu erwartende Schwierigkeiten bei einer seitlichen Zuführung des Spritzgussmaterials zu vermeiden. Ein anderer Teil der Dreheinrichtung wird von den diametral auf der Grundplatte 7 des Werkzeugunterteils gegenüberliegenden Anschlagbolzen 26 gebildet. Diese Anschlagbolzen wirken mit einem seitlich herausragenden Anschlag 27 an der Untergesenkplatte im Sinne einer Drehbereichsbegrenzung zusammen.

Bei dem beschriebenen und in den Figuren dargestellten Ausführungsbeispiel wird die Untergesenkplatte um ihre zentrale Achse gedreht. Es wäre natürlich in analoger Weise auch eine Lösung denkbar, bei der die Untergesenkplatte ortsfest bleibt und die Obergesenkplatte um die zentrale Achse drehbar ist. Wenngleich hier immer von Unter- und Obergesenkplatte gesprochen wird, so könnte das Werkzeug ebenso um 90° gedreht in die Spritzgussmaschine eingesetzt werden und man müsste dann konsequenterweise von einer vorderen und einer hinteren Gesenkplatte sprechen. Auch für diesen Fall wären die beiden bereits aufgezeigten Lösungen denkbar. Eine weitere Lösung könnte darin bestehen, dass das Werkzeug aus einer vorderen, mittleren und hinteren Gesenkplatte besteht, wobei die vordere und die hintere Gesenkplatte eine Verschiebebewegung ausführen, während die mittlere Gesenkplatte eine Drehbewegung vollzieht und zwar um eine Achse die genau senkrecht zur Verschiebebewegung liegt (bei dem in den Figuren dargestellten Ausführungsbeispiel liegen im Gegensatz hierzu Drehachse und Verschiebung in einer Richtung). Zu beiden Seiten der mittleren Gesenkplatte würden sich dann die Formnester befinden. Alle diese aufgezeigten und unter die Erfindung fallenden analogen Ausführungsbeispiele haben gemeinsam, dass eine Werkzeughälfte relativ zur anderen in eine zweite Position gedreht wird. Nachfolgend wird nun anhand des ersten Ausführungsbeispiels die Herstellung der Kontaktmatte beschrieben.

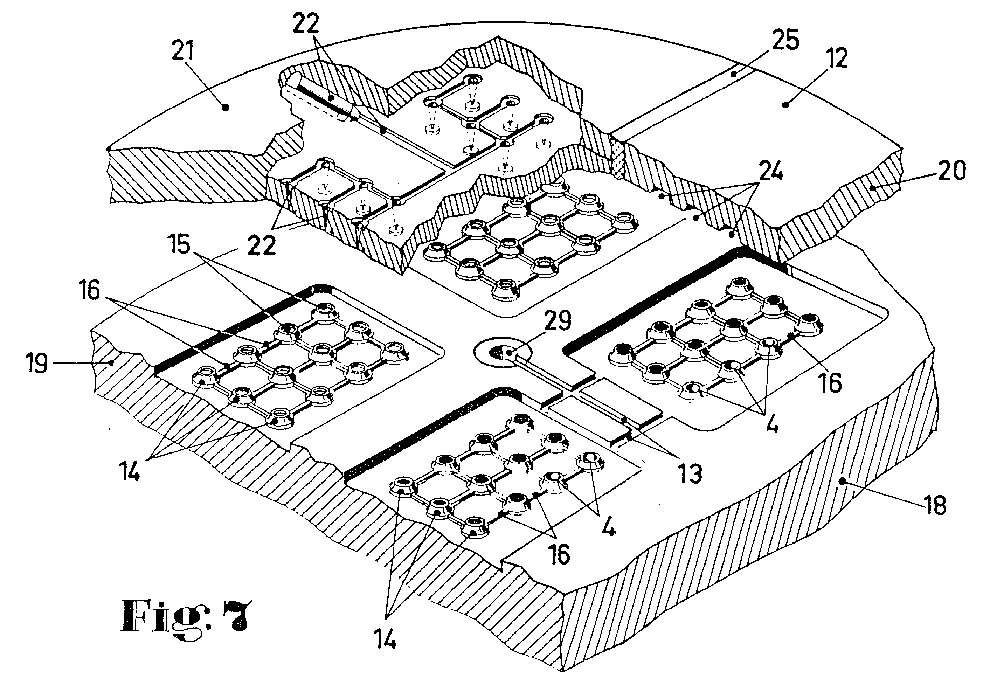

Wie aus Figur 2 zu entnehmen ist, wird zunächst das Kontaktteil 4 gespritzt. Dieses besteht, wie bereits erwähnt, aus einem Zweikomponenten-HTV-Siliconkautschuk, dem elektrisch leitfähige Teilchen beigemengt sind. Die linke Hälfte 19, als auch die rechte Hälfte 18 der Untergesenkplatte 9 besitzen hierzu zahlreiche durch Stege 16 verbundene Erhebungen 14, deren umlaufende Konturen die Innenflächen der Trägerteile bestimmen. Auf der Oberseite jeder Erhebung ist eine Aussparung 15 vorgesehen, die die Form des Kontaktteils aufweist. Durch trichterförmige Angusskanäle 22 wird nun in einem ersten Schritt das Kontaktteil 4 gespritzt. Die Temperatur der gesamten Untergesenkplatte 9 liegt über der Vulkanisierungstemperatur des hier verwendeten Siliconkautschukes, d.h. über 180°C. Die linke Hälfte 21 der Obergesenkplatte 12 liegt jedoch unter dieser Vulkanisierungstemperatur und zwar zwischen 60° und 120°C, abhängig vom Typ des verwendeten Siliconkautschukes. Die Aussparung 15 wird nun, allerdings nicht ganz bis zum Rand, gefüllt. Beim Zurückfahren des Werkzeugoberteils reisst der Verbindungssteg ab und es bleibt ein Stumpf 32 übrig. Nun wird das Werkzeugunterteil 5 bis zum Anschlag um 180° geschwenkt, so dass die mit dem Kontaktteil gefüllte Aussparung gegenüber dem Hohlraum 24 in Position gelangt. Durch den Abstand der Obervon der Untergesenkplatte ist die Dicke der Kontaktmatte festgelegt. Diese Position ist in Figur 3 dargestellt. Durch Angusskanäle 13 in der Untergesenkplatte werden nun der Verbundkörper 2 und das Trägerteil 3 gespritzt (Figur 4). Da nun die rechte Hälfte der Obergesenkplatte eine Temperatur besitzt, die oberhalb der Vulkanisierungstemperatur liegt, vulkanisiert die ganze Kontaktmatte erst jetzt richtig aus. Druck und Verschliesszeit (ca. 60 bis 100 sec.) entsprechen den üblichen Einstellungen.

Als Material wurde für die Kontaktmatte ein Zweikomponenten-HTV-Siliconkautschuk mit einer plastischen Konsistenz gewählt, der bei etwa 180°C vulkanisiert. Daneben können noch LSR-Zweikomponenten-Flüssig-Siliconkautschuke (LSR= liquid silicone rubber) eingesetzt werden, bei denen die Vulkanisierungstemperatur bei ca. 100°C liegt. Die relativen Temperaturverhältnisse im Werkzeug sind analog wie bei der Verarbeitung von HTV-Siliconkautschuk. Im übrigen gibt es sowohl bei den HTV-, als auch bei den LSR-Siliconkautschuken starke Streubreiten bei der Vulkanisierungstemperatur.

Von den Siliconkautschuk-Lieferanten wird nach der Vulkanisation der gefertigten Teile eine Hitzealterung (Temperung) empfohlen. Dies gilt jedoch nicht, wenn additionsvernetzende Materialien verwendet werden. Bei der Temperung werden die Vernetzerspaltprodukte entfernt, so dass die Teile geruchfrei werden. Zudem findet eine Restvernetzung statt, die eine Erhöhung der Shore-Härte sowie eine Verringerung der Bruchdehnung bewirkt. Durch die Nachheizung werden die Fertigteile öl- und lösungsmittelbeständiger, auch erhalten die Vulkanisate den höchsten Widerstand gegen bleibende Verformung durch Einwirkung von Druck sowie optimale elektrische Eigenschaften, was insbesondere für das Kontaktelement von Wichtigkeit ist. Ferner sind Silicongummiteile erst nach der Temperung dimensionsstabil, da infolge der Entfernung flüchtiger Bestandteil eine lineare Schrumpfung in der Grössenordnung von ca. 1% zu verzeichnen ist. Die Temperung erfolgt in einem Trockenschrank mit ausreichender Umluft und sie soll mindestens bei der Temperatur vorgenommen werden, bei der das Fertigteil später beansprucht wird, wobei der Grad der Temperatursteigerung sich nach der Dicke der Teile richtet.

Bezugszeichen zur Anmeldung «Verfahren zur Herstellung einer Kontaktmatte»
 1 Kontaktmatte
 2 Verbundkörper
 3 Trägerteil
 4 Kontaktteil
 5 Werkzeugunterteil
 6 Werkzeugoberteil
 7 Grundplatte des Werkzeugunterteils
 8 Isolierschicht im Werkzeugunterteil
 9 Untergesenkplatte
10 Grundplatte des Werkzeugoberteils
11 Isolierschicht im Werkzeugoberteil
12 Obergesenkplatte
13 Angusskanal in Untergesenkplatte
14 Erhebung
15 Aussparung
16 Steg
17 Druckausgleichkanal
18 rechte Hälfte von Untergesenkplatte
19 linke Hälfte von Untergesenkplatte
20 rechte Hälfte von Obergesenkplatte
21 linke Hälfte von Obergesenkplatte
22 Angusskanal in 21
23 Angusskanal in 20
24 Hohlraum
25 Isolierwand zwischen linker und rechter Hälfte in der Untergesenkplatte
26 Anschlagbolzen
27 Anschlag
28 Führungssäulen
29 Zentraler Angusskanal in Untergesenkplatte
30 Öffnung in Unter- und Obergesenkplatte
31 Hohlwelle
32 Stumpf

## Patentansprüche

1. Verfahren zur Herstellung einer für ein Drucktastenfeld geeigneten Kontaktmatte (1) nach dem Spritzgussverfahren, die aus einem flächenartigen Verbundkörper (2) aus einem elektrisch nicht leitenden, elastomeren Material, wie z.B. Kautschuk besteht, in dem sich wenigstens ein bei Anwendung eines Tastendruckes elastisch verformbares und kalottenförmig nach der einen Seite aus der Ebene des Verbundkörpers herausgeformtes Trägerteil (3) befindet, das mit einem aus einem gut leitenden Material hergestellten Kontaktteil (4) verbunden ist, dadurch gekennzeichnet, dass zunächst das Kontaktteil (4) in einer im wesentlichen aus einem Werkzeugunter- (5) und einem zweihälftigen Werkzeugoberteil (6) bestehenden Spritzgusswerkzeug geformt wird, wobei das Werkzeugunterteil (5) eine Temperatur besitzt, die oberhalb der Vulkanisierungstemperatur des Kontaktteils (4) liegt, und wobei die eine Hälfte (21) des Werkzeugoberteils (6) eine Temperatur besitzt, die unterhalb der Vulkanisierungstemperatur des Kontaktteils (4), liegt, dass nach dem Ausvulkanisieren des Kontaktteils (4) das Werkzeugunterteil (5) relativ zum Werkzeugoberteil von einer ersten in eine zweite Position bewegt wird, in der anschliessend durch Angusskanäle (13) im Werkzeugunterteil (5) der Verbundkörper (2) und die Trägerteile (3) so geformt werden, dass das Kontaktteil (4) mit dem Trägerteil (3) fest verbunden ist, wobei die Temperaturen des Werkzeugunterteils (5) und der anderen Hälfte (20) des Werkzeugoberteils (6) oberhalb der Vulkanisierungstemperatur des Verbundkörpers (2) mit seinem Trägerteil bzw. seinen Trägerteilen (3) liegen.

2. Verfahren zur Herstellung einer Kontaktmatte nach Anspruch 1, dadurch gekennzeichnet, dass als elektrisch nicht leitendes Material des Verbundkörpers (2) und der Trägerteile (3) ein beliebiger Elastomer, wie z.B. eine Siliconkautschukmischung, eine Nitrilkautschukmischung oder eine Chloroprenkautschukmischung verwendet wird.

3. Verfahren zur Herstellung einer Kontaktmatte nach Anspruch 2, dadurch gekennzeichnet, dass das Kontaktteil (4) und der Verbundkörper (2) aus dem gleichen entweder peroxidisch vernetzenden, additionsvernetzenden oder kondensationsvernetzenden Grundmaterialtyp bestehen.

4. Verfahren zur Herstellung einer Kontaktmatte nach einem der Ansprüche 1 bis 3, dadurch gekennzeichnet, dass dem Grundmaterial des Kontaktteils (4) zusätzlich elektrisch leitende Teilchen beigemengt sind.

5. Verfahren zur Herstellung einer Kontaktmatte nach Anspruch 4, dadurch gekennzeichnet, dass die elektrisch leitenden Teilchen aus Graphit, Russ oder elektrisch leitfähigem Metall, wie z.B. Silber, bestehen.

6. Verfahren zur Herstellung einer Kontaktmatte nach Anspruch 2, dadurch gekennzeichnet, dass der Siliconkautschuk ein Zweikomponenten-HTV-Siliconkautschuk ist.

7. Verfahren zur Herstellung einer Kontaktmatte nach Anspruch 2, dadurch gekennzeichnet, dass der Siliconkautschuk ein Zweikomponenten-Flüssig-Siliconkautschuk ist.

**Claims**

1. Process for the production, by means of an injection moulding process, of a contact mat (1) suitable for a push button panel, which mat consists of a planar composite body (2) of an electrically non-conductive elastomeric material, like e.g. rubber, in which, when using a push button, there is at least one resiliently deformable and spherically-shaped carrier part (3) moulded out of the plane of the composite body on one side, which carrier part is connected to a contact part (4) produced from a good conductive material, characterised in that first of all the contact part (4) is moulded in an injection moulding tool substantially comprising a lower tool part (5) and a two-halved upper tool part (6), wherein the lower tool part (5) has a temperatur which is above the vulcanisation temperature of the contact part (4), and wherein one half (21) of the upper part of the tool (6) has a temperature which is below the vulcanisation temperature of the contact part (4), in that after the full vulcanisation of the contact part (4) the lower part of the tool (5) is moved relatively to the upper part of the tool from a first into a second position in which the composite body (2) and the carrier parts (3) are then moulded through pouring-in channels (13) in the lower part of the tool (5) so that the contact part (4) is fixedly connected to the carrier part (3), wherein the temperatures of the lower part of the tool (5) and the other half (20) of the upper half of the tool (6) are above the vulcanisation temperature of the composite body (2) with its carrier part or parts (3).

2. Process for the production of a contact mat according to claim 1, characterised in that any elastomer, like e.g. a silicon rubber mixture, a nitrile rubber mixture or a chloroprene rubber mixture, is used as electrically non-conductive material of the composite body (2) and the carrier parts (3).

3. Process for the production of a contact mat according to claim 2, characterised in that the contact part (4) and the composite body (2) are of the same, either peroxidically crosslinking, addition crosslinking or condensation crosslinking, basic type of material.

4. Process for the production of a contact mat according to one of claims 1 to 3, characterised in that electrically conductive particles are additionally added to the basic material of the contact part (4).

5. Process for the production of a contact mat according to claim 4, characterised in that the electrically conductive particles are of graphite, carbon black or electrically conductive metal, like e.g. silver.

6. Process for the production of a contact mat according to claim 2, characterised in that the silicon rubber is a two-component high temperature crosslinking silicon rubber.

7. Process for the production of a contact mat according to claim 2, characterised in that the silicon rubber is a two component liquid silicon rubber.

**Revendications**

1. Procédé pour produire, selon le procédé de moulage par injection, une nappe (1) à contacts, convenant pour un ensemble ou clavier de boutons-poussoirs, et qui consiste en un corps (2) plat de liaison en une matière élastomère èlec-triquement non conductrice, comme par exemple du caoutchouc, dans laquelle se trouve au moins une partie (3) de support en forme de dôme faisant saillie d'un côté du plan du corps de liaison et élastiquement déformable par application d'une pression de bouton poussoir, et qui est liée à une partie (4) de contact réalisée en une matière bonne conductrice, procédé caractérisé en ce qu'on forme tout d'abord la partie (4) de contact dans un moule de moulage par injection consistant essentiellement et une partie inférieure (5) de moule et en une partie supérieure (6) de moule en deux moitiés, la partie inférieure (5) du moule présentant une température supérieure à la température de vulcanisation de la partie (4) de contact et une moitié (21) de la partie supérieure (6) du moule présentant une température inférieure à la température de vulcanisation de la partie (4) de contact; en ce que, après vulcanisation complète de la partie (4) de contact, on déplace la partie inférieure (5) du moule par rapport à la partie supérieure de ce moule, d'une première à une seconde position et l'on forme ensuite, à l'aide de canaux (13) d'alimentation ménagés dans la partie inférieure (5) du moule, le corps (2) de liaison et la partie (3) de support de manière que la partie (4) de contact soit assujettie à la partie (3) de support, les températures de la partie inférieure (5) du moule et de l'autre moitié (20) de la partie supérieure (6) du moule se situant au-dessus de la température de vulcanisation du corps (2) de liaison comportant sa ou ses partie(s) (3) de support.

2. Procédé de production d'une nappe à contacts selon la revendication 1, caractérisé en ce qu'on utilise, à titre de matière électriquement non conductrice du corps (2) de liaison et des parties (3) de support, un élastomère quelconque comme, par exemple, un mélange ou composition de caoutchouc de silicone, un mélange ou composition de caoutchouc nitrile ou un mélange ou composition de caoutchouc de chloroprène.

3. Procédé pour produire une nappe à contacts selon la revendication 2, caractérisé en ce que la partie (4) de contact et le corps (2) de liaison consistent en le même type de matière de base se réticulant sous l'effet d'un peroxyde, par addition ou par condensation.

4. Procédé pour produire une nappe à contacts selon l'une des revendications 1 à 3, caractérisé en ce que les particules électriquement conductrices sont en outre incorporées à la matière de base de la partie (4) de contact.

5. Procédé de production d'une nappe à contacts selon la revendication 4, caractérisé en ce que les particules électriquement conductrices consistent en du graphite, du noir de carbone ou du métal électriquement conducteur comme, par exemple, l'argent.

6. Procédé pour produire une nappe à contacts selon la revendication 2, caractérisé en ce que le caoutchouc de silicone est un caoutchouc de silicone à deux composants, vulcanisable à température élevée.

7. Procédé pour produire une nappe à contacts selon la revendication 2, caractérisé en ce que le caoutchouc de silicone est un caoutchouc de silicone liquide à deux composants.

Fig. 1

Fig. 2

**Fig. 3**

**Fig. 4**

**Fig. 5**

**Fig. 6**

Fig: 7

0 078 934